# EUROPÄISCHE PATENTANMELDUNG

(11) **EP 0 907 182 A2**
(43) Veröffentlichungstag der Anmeldung: **07.04.1999**
(21) Anmeldenummer: 98118268.6
(22) Anmeldetag: 26.09.1998
(51) Int. Cl.: G11B 33/04

(54) **Schutzhülle für eine CD**

(30) Priorität: 02.10.1997 DE 19743795
(71) Anmelder: Schwarz, Marc Oliver, 70563 Stuttgart (DE)
(72) Erfinder: Schwarz, Marc Oliver, 70563 Stuttgart (DE)
(74) Vertreter: Lutz, Johannes Dieter, Dr.

(57) **Zusammenfassung**

Bei einer Schutzhülle (10) für drei Digital-Schallplatten (C.D.), die jeweils von einer flachen, der Grundform nach quadratischen Papptasche (12) aufgenommen sind, ist ein äußeres Hüllenteil (13) vorgesehen, das in der Art einer Buchdecke gestaltet ist,mit zwei über einen schmalen Rücken (17) zusammenhängenden, der Grundform nach rechteckigen Deckelteilen (14 und 16), deren parallel zum Rücken gemessene Ausdehnung mindestens den Kantenlängen der Taschen entspricht und deren rechtwinklig zum Rücken gemessene Ausdehnung geringfügig größer ist als die Kantenlänge der Taschen (12); diese sind in dem Hüllenteil (13) drehbar gelagert, wobei die Drehachse (26) in einem vom Rücken (17) des Hüllenteils (13) entfernt angeordneten Eckbereich der Tasche senkrecht zu den Deckelteilen verlaufend angeordnet ist; in der Grundstellung der Papptaschen (12) sind diese vollständig vom Hüllenteil (13) aufgenommen, und die Öffnungsschlitze der Papptaschen der Innenseite des Rückenteils (17) unmittelbar gegenüberliegend angeordnet.

## Beschreibung

Die Erfindung betrifft eine Schutzhülle für mindestens eine Digital-Schallplatte (Compact-Disc) gemäß dem Oberbegriff des Patentanspruchs 1.

Es ist bekannt, als Schutzhüllen für CDs lediglich entlang eines Randes offene, der Grundform nach quadratische Papptaschen zu verwenden, die entlang eines sich über die gesamte Taschenbreite erstreckenden Schlitzes offen sind und, wenn die CD eingesteckt ist, unter einer geringfügigen Aufweitungs-Vorspannung stehen, durch die eine reibungsschlüssige Fixierung der CD in der Tasche erzielbar sein soll.

Ein wesentlicher Nachteil solcher Papptaschen ist darin zu sehen, daß die Disc, wenn die Papptasche etwas zusammengedrückt wird, so daß der Schlitz sich flachlinsenförmig aufweitet, sehr leicht und unkontrolliert herausfallen kann, mit der Folge einer Beschädigung der CD.

Um solchen Beschädigungen vorzubeugen, ist es auch bekannt, die Digital-Schallplatten in Kunststoff-Schutzhüllen einzulegen, die als flache, der Grundform nach etwa quadratische Boxen ausgebildet sind, deren etwa quadratische Wände um eine Achse schwenkbar sind, so daß diese Schutzhülle wie ein Buch aufgeschlagen und zugeklappt werden kann.

Derartige Schutzhüllen sind herstellungstechnisch aufwendig, daher teuer und sind auch hinsichtlich der Handhabung zum Entnehmen der jeweiligen CD umständlich.

Aufgabe der Erfindung ist es daher, eine Schutzhülle für Digital-Schallplatten anzugeben, die bei gleichwohl einfachem und preisgünstigem Aufbau eine gute Schutzwirkung vermittelt und darüberhinaus auch einer bequemen Handhabung zugänglich ist.

Diese Aufgabe wird erfindungsgemäß durch die kennzeichnenden Merkmale des Patentanspruchs 1 gelöst:
a) Die Schutzhülle umfaßt ein äußeres Hüllenteil, das in der Art einer Buchdecke gestaltet ist mit zwei über einen schmalen Rücken zusammenhängenden, der Grundform nach rechteckigen Deckelteil deren parallel zum Rücken gemessene Ausdehnung mindestens den Kantenlängen der Tasche entspricht und deren rechtwinklig zu Rücken gemessene Ausdehnung geringfügig größer ist als die Kantenlänge der Tasche;
b) die Papptasche ist in dem Hüllenteil drehbar gelagert, wobei die Drehachse in einem vom Rücken des Hüllenteils entfernt angeordneten Eckbereich der Tasche senkrecht zu den Deckelteilen verlaufend angeordnet ist;
c) in der Grundstellung der Papptasche, in der diese vollständig vom Hüllenteil aufgenommen ist, ist der Öffnungsschlitz der Papptasche zur Innenseite des Rückenteils hinweisend angeordnet.

Hierdurch erzielte Vorteile der erfindungsgemäßen Schutzhülle sind zumindest die folgenden:

In der vom äußeren Hüllenteil vollständig aufgenommenen Grundstellung der Papptasche ist die in ihr enthaltene CD zuverlässig gegen ein Herausfallen aus der Schutzhülle gesichert. Ein Herausnehmen der CD erfordert eine drehende Manipulation ihrer Papptasche, die nicht zufällig eintreten kann. Es wird bei geringem Mehraufwand hinsichtlich der Gestaltung der Schutzhülle eine wesentlich bessere Schutzwirkung erzielt.

In bevorzugter Gestaltung ist die erfindungsgemäße Schutzhülle für die Aufnahme von mindestens zwei, vorzugsweise von drei Digital-Schallplatten ausgelegt, was ohne nennenswerte Vergrößerung der Schutzhülle, d.h. des Abstandes ihrer Deckelteile voneinander möglich ist. Es wird eine sehr raumsparende Unterbringung mehrerer, ein Album bildender CDs erreicht. Anstelle einer Papptasche ist es auch möglich, einen der Grundform nach quadratischen Informationsträger in der Hülle drehbar zu lagern, wobei auf einem solchen Informationsträger Informationen zum Inhalt der mindestens einen CD, die die Schutzhülle enthält, aufgedruckt sein können. Für den Fall, daß drei Discs von der Schutzhülle aufgenommen sind, können deren Papptaschen-Sichtflächen insgesamt zur Informations-Darbietung oder zur graphischen Gestaltung genutzt werden, beispielsweise dadurch, daß die Papptaschen- oder bedruckten Kartons, zu einer insgesamt quadratischen Sichtfläche aufgefächert werden können, deren Kantenlänge etwa dem doppelten Wert der Kantenlängen der Papptaschen, je für sich gesehen, entspricht.

Wenn das Drehgelenk für die Papptaschen durch eine Niet-Verbindung der Deckelteile des Hüllenteils gebildet ist, so ist eine sehr einfache und rationelle Fertigung der Schutzhülle möglich.

Besonders vorteilhaft ist hierbei die Gestaltung des Niets gemäß den Merkmalen des Anspruchs 4.

In Kombination mit einer solchen Niet-Verbindung kann es auch zweckmäßig sein, wenn eine den zentralen Nietschaft koaxial umgebende Abstandshülse vorgesehen ist, die auch zur leichtgängigen Dreh-Lagerung der Papptaschen von Vorteil ist.

In bevorzugter Gestaltung der Schutzhülle ist deren Äußeres, buchdeckenförmiges Hüllenteil seinerseits aus einem Karton-Material gefertigt, so daß die Schutzhülle insgesamt in einem Betrieb der Verpackungsindustrie rationell gefertigt werden kann.

In Anbetracht der preisgünstigen Fertigbarkeit der Schutzhülle kann diese auch als "Wegwerf"-Verpackung für eine Mehrzahl von Digital-Schallplatten konzipiert werden.

Durch eine oder mehrere gemäß Anspruch 7 vorgesehene Griffausnehmungen(n), bevorzugt in der durch die Merkmale des Anspruchs 8 angegebenen Anordnung, ist das Herausdrehen der Papptaschen aus dem buchdeckenförmigen Hüllenteil sehr bequem möglich.

Weitere Einzelheiten der Erfindung ergeben sich aus der nachfolgenden Beschreibung eines speziellen Ausführungsbeispiels anhand der Zeichnung. Es zeigen:
- Fig 1: eine vereinfachte perspektivische Ansicht einer erfindungsgemäßen Schutzhülle;
- Fig. 2: eine Draufsicht auf eine Tasche der Hülle gemäß Fig. 1 und
- Fig 3: das Drehgelenk für die Papptaschen im Schnitt in einer die Drehachse enthaltenden Ebene.

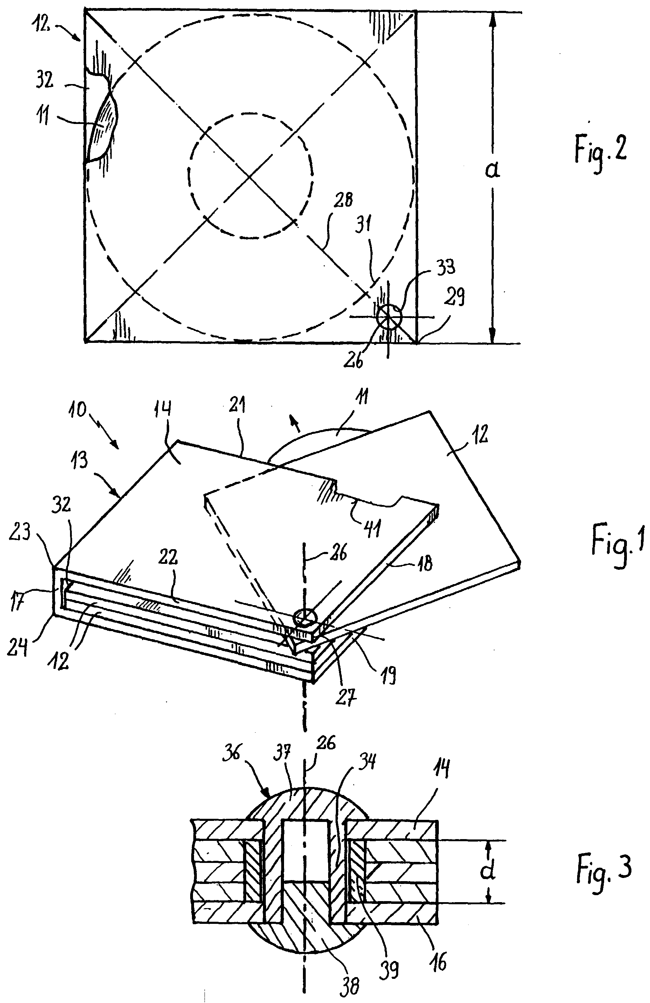

Die in der Fig. 1 insgesamt mit 10 bezeichnete Schutzhülle für Digital-Schallplatten 11 ist für die Aufnahme dreier solcher Schallplatten 11 gedacht, die je für sich in eine Papptasche 12 einschiebbar sind, die als der Grundform nach quadratische, einseitig offene Aufnahmehüllen ausgebildet sind, die hinsichtlich ihrer Außenabmessungen üblichen Papier- oder KartonSchutzhüllen für Digital-Schallplatten 11 entsprechen.

Die Schutzhülle 10 umfaßt ein in der Art einer Buchdecke ausgebildetes äußeres, insgesamt mit 13 bezeichnetes Hüllenteil, dessen sichtseitiger, vorderer Deckel 14 und dessen rückseitiger Deckel 16 über einen schmalen Rücken-Abschnitt 17 zusammenhängen und als insgesamt einstückiges Teil aus faltbarem Karton ausgebildet sind. Das Hüllenteil 13 entspricht hinsichtlich der Länge der parallel zu Rücken laufenden Randkanten 18 und 19 seines vorderen Deckels 14 und seines rückwärtigen Deckels 16 der äußeren Kantenlänge a der Papptaschen 12, die, abgesehen von einem geringen Übermaß wegen der Materialdicke des Pappmaterials, aus dem diese Taschen 12 bestehen, im wesentlichen dem Durchmesser der jeweils aufgenommenen Digital-Schallplatte 11 entpricht.

Die Längen der rechtwinklig zum Rücken 17 verlaufenden Deckelränder 21 und 22 sind geringfügig größer als die Längen der parallel zum Rücken 17 verlaufenden Deckelränder 18 und 19, wobei die Abweichung von der quadratischen Grundform nur gering ist und im Bereich weniger Prozent beträgt. Für die Herstellung des Hüllenteils 13 eignet sich ein Pappkarton mit einem auf den Quadratmeter bezogenen Gewicht von 4 bis 6 N/m².

Die zwischen den Deckelteilen 14 und 16 angeordneten, quadratischen Papptaschen 12 sind in dem äußeren Hüllenteil 13 um eine senkrecht zu den Deckelteilen 14 und 16 verlaufende Achse 26 drehbar angeordnet, die in einem der beiden vom Rücken 17 des äußeren Hüllenteils 13 angeordneten Eckbereiche liegt, beim dargestellten, speziellen Ausführungsbeispiel gemäß der Ansichtsdarstellung der Fig. 2 in unmittelbarer Nähe der "rechten" unteren Ecke 27 der übereinander angeordneten Deckelteile 14 und 16.

Bei dem zur Erläuterung gewählten Ausführungsbeispiel liegt der Durchstoßpunkt der Drehachse 26 der Papptaschen 12, entlang deren Diagonalen 28 gesehen, "in der Mitte" zwischen der Ecke 29 der jeweiligen Papptasche 12 und dem Konturenrand 31 der von der Papptasche 12 jeweils aufgenommenen C.D. 11.

In der von der Schutzhülle 10 vollständig aufgenommenen Anordnung der Papptaschen 12 sind diese so angeordnet, daß ihre Einsteck-Schlitzseite 32 auf den Rückenabschnitt 17 des buchdeckenförmigen Hüllenteils 13 zuweist und unmittelbar neben dessen Innenseite angeordnet ist, so daß die Digital-Schallplatten 11 nicht aus den Taschen 12 herausfallen können.

Die Papptaschen 12 sind mit miteinander fluchtenden, kreisrunden Ausnehmungen 33 versehen, durch die ein rohrförmiger Schaft 34 (Fig. 3) eines insgesamt mit 36 bezeichneten Hohlniets hindurchtritt, der einen an der Außenseite des vorderen Deckels 14 abgestützten flachkalottenförmigen Setzkopf 37 und einen an der Außenseite des rückseitigen Deckelteils 16 abgestützten, seinerseits flach-kalottenförmigen Schließkopf 38 hat, der von der Rückseite her in den Schaft 34 des Hohlniets 36 eingetrieben ist.

Zwischen dem vorderen Deckenteil 14 und dem rückwärtigen Deckelteil 16 ist, in koaxialer Anordnung mit dem Niet 36 eine rohrförmige Abstandshülse 39 angeordnet, die im Bereich des Niets 36 das vordere Deckelteil 14 und das rückwärtige Deckelteil 16 in einem der Dickensumme der Papptaschen 12 entsprechenden Abstand d hält, um im Bereich des durch den Niet 36 markierten Drehgelenks eine leichtgängige Drehbarkeit der Papptaschen zu gewährleisten.

Um das Herausdrehen der Papptaschen zur Entnahme der Digital-Schallplatte 11 aus der Schutzhülle 10 zu erleichtern, ist am vorderen Deckelteil 14 des buchdeckenförmigen Hüllenteils 13 eine Griffausnehmung 41 vorgesehen, die zweckmäßigerweise an dem dem Drehgelenk 46 gegenüberliegenden äußeren Randbereich der oberen Querkante 21 des Deckelteils 14 angeordnet ist.

Sowohl die im wesentlichen quadratischen Außenflächen des Hüllenteils 13 als auch die bei einer Auffächerung der drei Papptaschen 12 um 90° bzw. 180° bzw. 270° bezüglich der Grundstellung freiwerdenden rechteckigen Sichtflächen können zur Darstellung von Information oder zu einer zusammenhängenden graphischen Gestaltung der Schutzhülle genutzt werden.

## Patentansprüche

1. Schutzhülle für mindestens eine Digital-Schallplatte (C.D.), die von einer flachen, der Grundform nach quadratischen Papptasche aufgenommen ist, die einen sich entlang der Konturenkanten erstreckenden Öffnungsschlitz zum Einstecken und Herausnehmen der Schallplatte hat, **gekennzeichnet durch** die folgenden Merkmale:
a) die Schutzhülle (10) umfaßt ein äußeres Hüllenteil (13), das in der Art einer Buchdecke gestaltet ist mit zwei über einen schmalen Rücken (17) zusammenhängenden, der Grundform nach rechteckigen Deckelteil (14 und 16), deren parallel zum Rücken gemessene Ausdehnung mindestens den Kantenlängen der Tasche entspricht und deren rechtwinklig zu Rücken gemessene Ausdehnung geringfügig größer ist als die Kantenlänge der Tasche (12);
b) die Papptasche (12) ist in dem Hüllenteil (13) drehbar gelagert, wobei die Drehachse (26) in einem vom Rücken (17) des Hüllenteils (13) entfernt angeordneten Eckbereich der Tasche senkrecht zu den Deckelteilen verlaufend angeordnet ist;
c) in der Grundstellung der Papptasche (12), in der diese vollständig vom Hüllenteil (13) aufgenommen ist, ist der Öffnungsschlitz der Papptasche der Innenseite des Rückenteils (17) gegenüberliegend angeordnet.

2. Schutzhülle nach Anspruch 1, **gekennzeichnet durch** ihre Auslegung für die Aufnahme von mindestens zwei, vorzugsweise von drei Digital-Schallplatten (11).

3. Schutzhülle nach Anspruch 1 oder 2, **dadurch gekennzeichnet,** daß das hüllenteil-seitige Gelenk-Element, um das die jeweilige Papptasche (12) drehbar ist, durch den Schaft (34) eines die Deckelteile im Eckbereich verbindenden Niets (36) gebildet ist.

4. Schutzhülle nach Anspruch 3, **dadurch gekennzeichnet,** daß der Niet (36) als Hohlniet ausgebildet ist, in dessen rohrförmigen Schaft ein Schließkopfteil (37) eingepreßt ist.

5. Schutzhülle nach Anspruch 3 oder 4, **dadurch gekennzeichnet,** daß in koaxialer Anordnung mit dem Schaft (34) des Niets (36) eine durch miteinander fluchtende kreisrunde Ausnehmungen der Papptaschen (12) hindurchtretende Abstandshülse (39) vorgesehen ist, die im Bereich des Drehgelenks die Deckelteile des buchdeckenförmigen Hüllenteils (13) im Abstand der Dicke des zwischen den Deckelteilen (14,16) angeordneten Taschen-Stapels hält.

6. Schutzhülle nach einem der Ansprüche 1 bis 5, **dadurch gekennzeichnet,** daß das buchdeckenförmige Hüllenteil (13) als einstückiges Kartonteil ausgebildet ist.

7. Schutzhülle nach einem der Ansprüche 1 bis 6, **dadurch gekennzeichnet,** daß das buchdeckenförmige Hüllenteil (13) mindestens an einem seiner Deckelteile (14,16), vorzugsweise dem sichtseitig angeordneten Deckelteil (14) mit einer randoffenen Griffausnehmung (41) versehen ist.

8. Schutzhülle nach Anspruch 7, **dadurch gekennzeichnet,** daß die Griffausnehmung im Bereich der rechtwinklig zum Rückenteil verlaufenden freien Kante des jeweiligen Deckelteils, vorzugsweise in der Nähe des gelenkfernen Eckbereiches des Hüllenteils angeordnet ist.
